Europäisches Patentamt

European Patent Office

Office européen des brevets

(11) Publication number: **0 057 087**
**A2**

(12) **EUROPEAN PATENT APPLICATION**

(21) Application number: **82300308.2**

(22) Date of filing: **21.01.82**

(51) Int. Cl.³: **E 03 D 5/00**
**E 03 D 7/00**

(30) Priority: **23.01.81 GB 8102031**

(43) Date of publication of application:
**04.08.82 Bulletin 82 31**

(84) Designated Contracting States:
**AT BE CH DE FR GB IT LI LU NL SE**

(71) Applicant: **Wilson, Robert Victor**
**25, Burnham Road**
**Epworth Doncaster South Yorkshire DN9 1BX(GB)**

(72) Inventor: **Wilson, Robert Victor**
**25, Burnham Road**
**Epworth Doncaster South Yorkshire DN9 1BX(GB)**

(74) Representative: **Harrison, Michael Robert et al,**
**URQUHART-DYKES & LORD 11th Floor Tower House**
**Merrion Way**
**Leeds LS2 8PB(GB)**

(54) **Chemical toilets.**

(57) A flushing chemical toilet 3 is adapted so as to be capable of being emptied into a waste tank 47 on a toilet servicing unit by means of a vacuum pump mounted on the unit. The servicing unit also includes toilet cleaning means for spraying the toilet 3 with an atomised liquid cleaner and refilling the cistern 27 with, for example, a solution of formaldehyde in water.

A method of emptying a chemical toilet 3 is also described.

EP 0 057 087 A2

Fig 1.

- 1 -

## CHEMICAL TOILETS

The present invention relates to chemical toilets.

Conventional chemical toilets are in widespread use in situations where it is impossible or impractical to plumb in a normal water closet. Such applications are in camping, caravanning or boating or on work sites such as building sites or mines.

However, chemical toilets when they are full must be emptied. In conventional chemical toilets this emptying is done manually as is usually any subsequent cleaning of the toilet. This is both disagreeable and potentially a health hazard.

According to the present invention there is provided a portable toilet unit comprising a toilet bowl, a receptacle for waste matter located below said bowl, a container for a cleaning liquid, means for delivering said cleaning liquid from said container to the bowl so as to clean the bowl and to wash waste matter from the bowl into the receptable, the unit being provided with means whereby a waste removal unit may, when desired, be connected to the toilet unit for removal of waste matter to a remote site, and means whereby, when desired, cleaning liquid may be supplied to the unit from a remote site so as to clean the waste receptacle and refill the cleaning liquid container.

A portable toilet unit thus provides means for washing waste matter from a toilet bowl into a receptacle from where the waste can be removed as desired. The receptacle and cleaning liquid container can also be cleaned and refilled, respectively, as desired.

Preferably, the receptacle is located below the toilet bowl and within the container, the cleaning liquid being held between the outer surface of the receptacle and the inner surface of the container. This arrangement allows the container and receptacle to be positioned in a relatively compact volume, making the unit more easily portable.

Preferably, there are provided pump means for feeding cleaning liquid from the container to spray outlets located adjacent the upper periphery of the toilet bowl. The cleaning liquid can then be pumped relatively uniformly over the inside of the bowl, so effectively washing waste matter into the receptacle beneath the bowl.

According to the present invention, there is also provided a toilet assembly comprising a toilet unit as above described, a waste removal unit adapted so as to be capable of connection to the toilet unit to move waste from the receptacle to a remote site, and a cleaning unit adapted so as to be capable of connection to the toilet unit to deliver cleaning liquid in the form of an atomised spray to the receptacle so as to clean the interior of the receptacle, and to deliver cleaning liquid to the container, so as to raise the level of the cleaning liquid in the container to a predetermined level.

Preferably, the waste matter is removed from the receptacle by pump means and stored in a first remote tank for subsequent disposal, and cleaning liquid is delivered to the receptacle and container by pump means from a second remote storage tank.

Conveniently, the first and second storage tanks are of sufficient capacity as to be capable of emptying or cleaning a plurality of toilet units before being themselves emptied or refilled.

Preferably, the pump means are vacuum pump means comprising a substantially closed chamber into which are inserted two concentric venturis, positioned so as to be spaced apart in the direction of the longitudinal axes of the venturis , a first one of the venturis having a smaller bore than the second, and having a substantially conical end spaced from a complementary adjacent end of the second venturi, so that air blown from the first venturi into the wider bore of the second venturi causes a substantial vacuum in the closed chamber, the vacuum being transmitted to the desired locations by tube means leading from the chamber.

The use of such pumps in apparatus in accordance with the present invention is particularly useful, because of the lack of moving parts to jam or otherwise become inoperative. The relative sizes of the venturis and the chamber can be varied to give any desired pumping rate or pressure.

Preferably, at least one of said first or second storage tanks is mounted on a mobile vehicle. More preferably both are so mounted. Such an arrangement allows the assembly to serve a plurality of toilet units situated at dispersed locations.

The present invention further provides a method of servicing a toilet unit as above described, the method comprising connecting a waste removal unit to the toilet unit and activating pump means to move waste from the receptacle to a remote site, and connecting a cleaning unit to the toilet unit and activating pump means to deliver cleaning liquid to the container to a predetermined level, and to deliver cleaning liquid in an atomised spray to clean the interior of the receptacle.

The apparatus in accordance with the present invention is preferably of a material having a relatively good surface electrical conductivity. This inhibits the building up of static electrical charge on the apparatus, which, in certain environments could lead to sparks and possibly danger of explosions. An example of such an environment is an underground mine. Conveniently the apparatus is of a plastics material. More preferably it is of a glass reinforced plastics (GRP) material with greater than 4.5% by weight of carbon black. This allows the apparatus to be constructed relatively cheaply and easily by moulding techniques and enables easy cleaning of the apparatus.

Advantageously, the plastics material includes a fire-retardant additive. Conveniently the plastics material includes a viscosity reducing additive. Preferably the plastics material includes an additive which is a fire-retardant and which also reduces the viscosity of the plastics material. More preferably the additive is tri-beta-chloroethylphosphate (TCEP).

It has been found that apparatus in accordance to the present invention made from such a GRP material has low surface resistivity and hence a low capacity for the build-up of static electricity. The fire retardant additive, TCEP, has surprisingly been found to decrease the viscosity of the resin thereby making the moulding operations simpler to perform. Preferably the resin contains from 5 to 20% of TCEP by weight.

Antimony oxide may be added to the resin in addition to halogenated additives, further to increase the fire retardancy of the resin.

Preferably the carbon black has a bulk resistivity under dry conditions of between 0.1 and 5 ohms per cubic centimetre. More preferably the resistivity is between 0.1 and 1 ohm per cc. Most preferably the resistivity is approximately 0.2 ohm per cc.

Preferably the carbon black comprises between 5 and 10% by weight of the resin. More preferably it comprises between 5 and 6.5% by weight of the resin.

The resin may be, for instance, one of the four common resins used in GRP manufacturing, namely the polyester resins based on HET acid, orthophthallic acid, isophthallic acid and bisphenol. Preferably it is a HET acid based resin or a phthallic acid based resin.

The choice of grade of carbon black to be used in resins according to the present invention may depend on several factors. Powdered carbon black is easily assimilated by the resin. However, the finer the grain size of carbon black used the greater the increase in viscosity of the liquid resin. As additional additives to the resin may well also tend to increase the viscosity, the grade of carbon black used will be a compromise between adequate assimilation and a viscosity suitable for handling.

The resin may also include other conventional known additives. These additives may further increase the fire retardancy of the material, and catalyse or promote hardening of the resin.

Preferably the resin includes about 5% by weight of styrene. The addition of styrene to the resin also tends to reduce the viscosity of the resin. Furthermore it tends to increase the cross-linking in the resin thereby opposing the plasticizing effect of TCEP.

A suitable curing system is cobalt soap and methylethyl ketone peroxide (MEKP).

Embodiments of the various aspects of the present invention will now be described, by way of example only, and with reference to the accompanying drawings, in which:-

Figure 1 is a perspective view of a complete chemical toilet unit in accordance with the present invention with part of the emptying and cleaning apparatus also shown;

Figure 2 is a cut-away perspective view of the toilet unit of Figure 1 with additional details of the emptying and cleaning apparatus;

Figure 3 is a side elevation of a part of the waste emptying apparatus;

Figure 4 is a plan view of a part of the waste emptying apparatus shown in Figure 3; and

Figure 5 is a diagrammatical representation of a cross-section through one of the vacuum pumps used in the toilet emptying and cleaning apparatus;

Figure 6 is a diagrammatic cross-section through a vacuum cut-off valve; and

Figure 7 is a graph of resistivity against carbon black content of a GRP material used in the apparatus of the present invention.

Referring to the drawings, a toilet unit in accordance with the present invention indicated generally by 1 comprises chemical toilet 3 surrounded by cabinet 5 both being supported by a platform 7. Platform 7 is provided with adjustable legs so as to be capable of being levelled even on uneven ground. It is of course preferable that the toilet be substantially level.

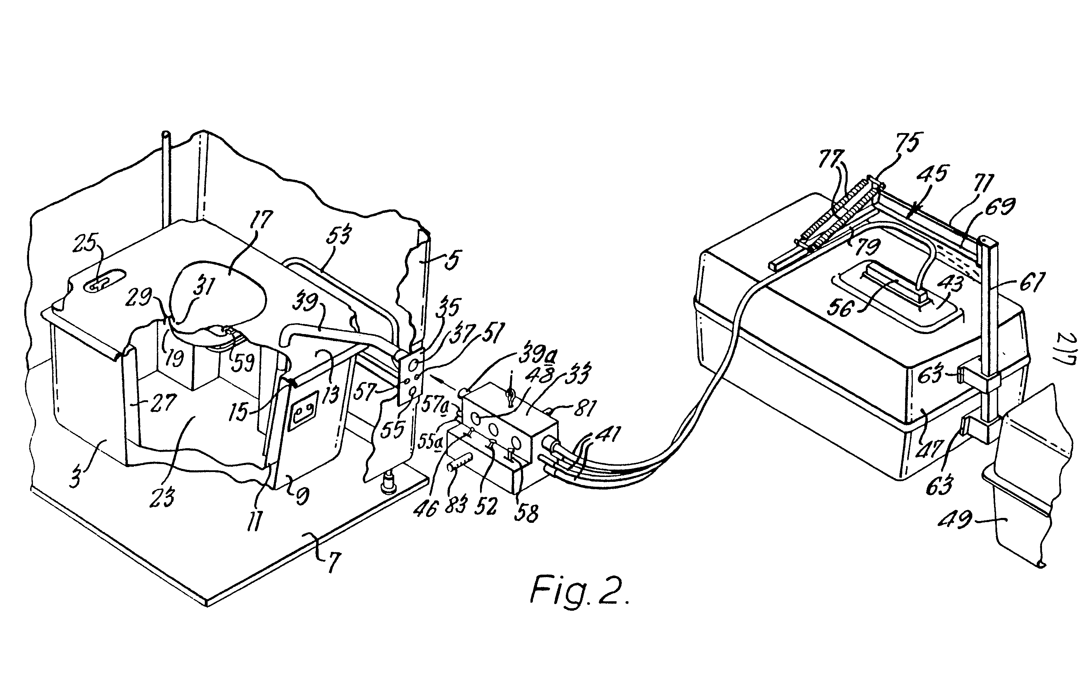

Referring particularly to Figure 2, the chemical toilet 3 comprises an outer substantially rectangular tank 9 containing a smaller tank 11. The shape of the tanks is not limited to rectangular but it is essential that there should be an air-tight seal between the tops of the inner tank 11 and outer tank 9.

Substantially covering the top opening of the inner tank 11 is a cover 13. The edges of the tank 13 are bonded to the tops of both the inner tank 11 and the outer tank 9 as shown at 15. This bonding is carried out over the whole of the periphery of the top cover 13.

Set into cover 13 at substantially the centre thereof is a toilet bowl. The toilet bowl 17 is of slightly greater diameter than the hole in cover 13 under which it is fixed. There is, therefore, a lip formed by the overhang of the edge of the cover 13 which is curved downwardly for reasons of safety and comfort, thus forming a recess between the top edge of the bowl 17 and the lip. Inserted into this recess is a pipe 19 leading to a hand pump 25.

In use waste matter deposited in toilet bowl 17 falls through the central aperture 21 into the interior 23 of the inner tank 11. In order to wash toilet bowl 17 the user then uses conventional hand pump 25 to pump cleaning material, in this case a 0.1% solution of formaldehyde in water, from its position in the gap 27 between inner tank 11 and outer tank 9 through the tube 19 into the recess 31 between top cover 13 and toilet bowl 17. The water so pumped is ejected at considerable pressure and washes around toilet bowl 17 before dropping through aperture 21 into waste container 23.

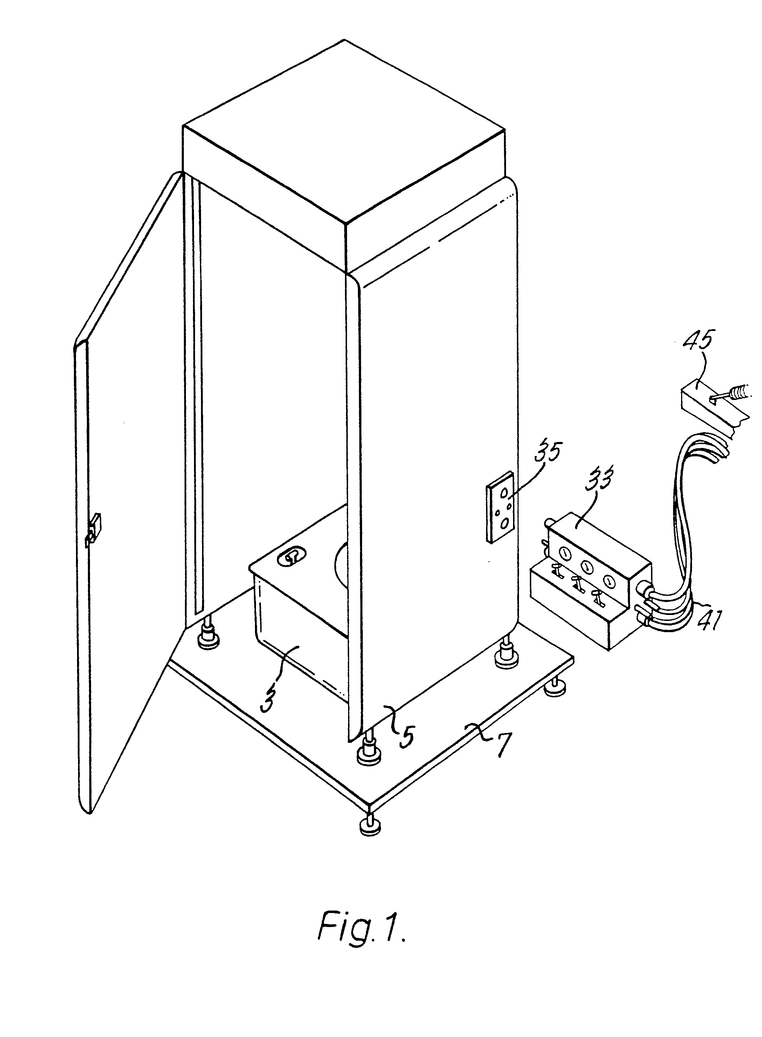

Eventually it will become necessary to empty waste matter from the interior 23 of the inner tank 11 and/or to refill the gap 27 between inner tank 11 and outer tank 9 with the clean water formaldehyde mixture. A toilet servicing unit is moved up to the chemical toilet requiring emptying and/or filling. As can be seen from Figure 1 and Figure 2, the toilet servicing unit includes a combined control and connector box 33 supported by a boom arrangement 45 and connected via pipes 41 to the remainder of the toilet emptying and cleaning apparatus.

One end of the connector box 33 is equipped with projecting tubes designed so as to mate with tubular recesses in the toilet connector unit 35.

Referring to Figure 2 in particular, the recess 37 in the connector unit 35 leads to a wide bore tube 39. The tube 39 leads from the connector unit 35 through the top cover 13 of the toilet and down into the interior 23 of the inner tank 11.

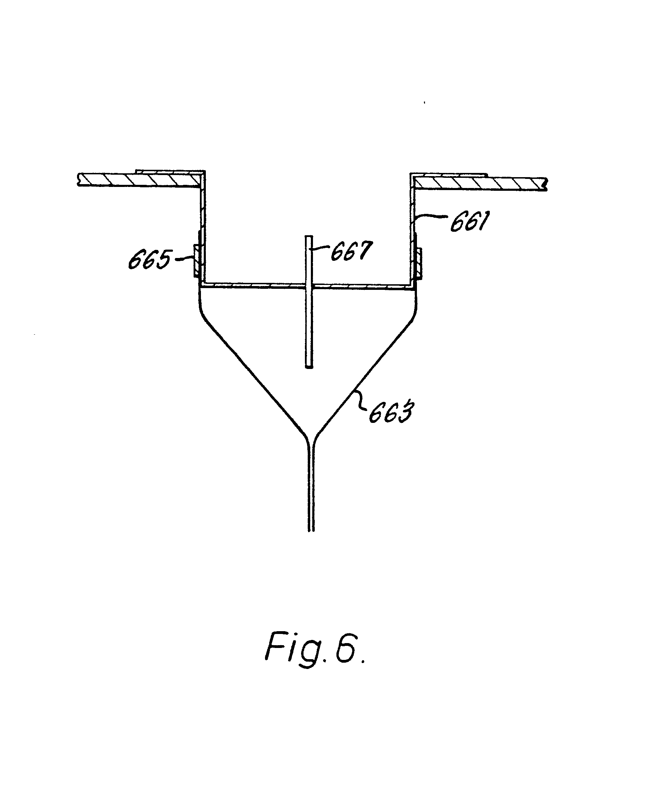

The corresponding pipe on the toilet servicing unit leads from the connector box 33 along boom arrangement 45 to waste tank 47 via vacuum tank 43 mounted on the top of the main waste tank 47. The vacuum tank 43 has as shown in Figure 6 bonded into its lower surface, a pipe connector 661 to which is attached a length of piping 663. The piping 663 is so-called "lay flat" piping which, as the term implies, adopts a flat form, opening only when matter is passed down the piping.

The piping 663 is attached to the pipe connector 661 by stretching an end of the pipe 663 over the connector 661 and retaining it in position by means of a circlip 665. Welded to the inner surface of the connector 661 are a pair of pins 667 aligned with the natural folds in the piping 663. The lower end of the piping 663 which, in use, hangs in the interior of the connector tank 47 has its two corners heat sealed so as to prevent the formation of apertures at the corners when the pipe 663 lies in the flat position.

When a vacuum is applied to the vacuum tank 43 tube 663 seals by collapsing. The pins 667 prevent the pipe 663 being drawn up into the tank 43. Waste matter from the interior 23 of the inner tank 11 of the chemical toilet is sucked up the tube 39 through the mounting recess 37 into a corresponding pipe 39a of the connector box 33. The waste matter then passes along this pipe into the vacuum tank 43. When the vacuum in the vacuum tank 43 is released or alternatively when the interior 23 of the inner tank 11 of the toilet is substantially empty the vacuum to the vacuum tank 43 is cut off. The waste in the vacuum tank 43 flows under gravity through the tube 663 into the main waste tank 47. This emptying operation is controlled by the on/off lever 46 on the connector box 33 which also is equipped with a vacuum gauge 48 to monitor the progress of the emptying operation.  On/off switch 46 controls the status of the vacuum pump which ᵢs used to create the vacuum in the vacuum tank 43.

The second stage in the complete toilet servicing cycle is to refill the waste tank 56 and the gap 27 between the inner tank 11 and the outer tank 9 of the toilet with a clean water/formaldehyde solution. This is done by evacuating the air from the gap 27 by means of a vacuum pump situated in the main control unit 771.  The air is sucked along the tube 53 connecteᵈ between the gap 27 and the recess 51 in connecting unit 35 and thence through the connector box 33 to the vacuum pump in control unit 771 from where it is releaseᵈ into the external atmosphere.

Also connected to the gap 27 is the wide bore tube 62 which ends at the recess 55 in the connecting plate 35 of the toilet unit.  When mated with the correspondiᵣg pipe 55a of the control unit 33 the pipe 62 is connecteᵈ via the control and connection unit 33 and the boom arrangement 45 to a freshwater tank 49 situated near to the waste tank 47.  The freshwater tank in fact containₛ a clean supply of water formaldehyde solution.  The evacuation of the gap 27 between the inner tank 11 and the outer tank 9 of the toilet unit causes water formalᵈehyde solution from the tank 49 to flow along the pipe 55a intc the pipe 62 and then into the gap 27.  Simultaneously tₕe wash  tank 56 situated in the main central unit 771 is evacuated and filled with water formaldehyde solution. When the level of liquid reaches a desired level, a floaₜ valve in the waste tank closes off the air outlet cuttiᵣg off the vacuum.  When the water in the gap 27 reaches a desired level a float valve situated at the end of the vacuum tube 53 in the gap 27 closes so preventing the suction of any more water into the gap 27 and registeriᵣg on vacuum gauge 54 of the control unit 33 as a minimum vacuum. This is the signal for the operator to use control 52 to turn off the vacuum pump for this operation.

Finally, to initiate the cleaning part of the servicing operation the operator uses the switch 58 on the connector box 33 to pressurise the wash tank 56 situated in the main control unit 771. The water formaldehyde solution is forced into the open end of a supply tube leading from the wash tank 56 to the toilet unit. In addition, air enters the tube through aperture positioned perpendicularly to the direction of flow of liquid, partially atomising the liquid in thé tube. The atomised spray is then pressure fed along piping connected to the boom arrangement 45 and to the connector unit 33 to emerge from the control unit 33 at pipe 57a. This mates with the recess 57 of the connecting unit 35 of the toilet and the atomised spray is then blown along the tube 62 to pass through the top cover 13. The pipe 62 is then connected to an annular tubing 59 which passes around the part of the toilet bowl 17 projecting into the interior 23 of the inner tank 11. The tubing 59 has holes at regular intervals along its circumference. The holes are so positioned that when the atomised mist of the water formaldehyde solution is fed under pressure into the annular pipe 59 some of the spray is forced through each hole so as to direct water at the sides of the interior 23 of the inner tank 11. This serves the dual purpose of both washing the inside of the tank 11 and also of priming the tank 11 with some liquid. When this has occurred the cleaning operation is completed and the operator closes the air supply to the wash tank. The connector 33 may then be withdrawn from its mating co-operation with the connector unit 35 of the toilet and the whole toilet servicing unit may then be removed to another location to repeat the procedure if required or to empty the waste tank 47 and refill the freshwater tank 49.

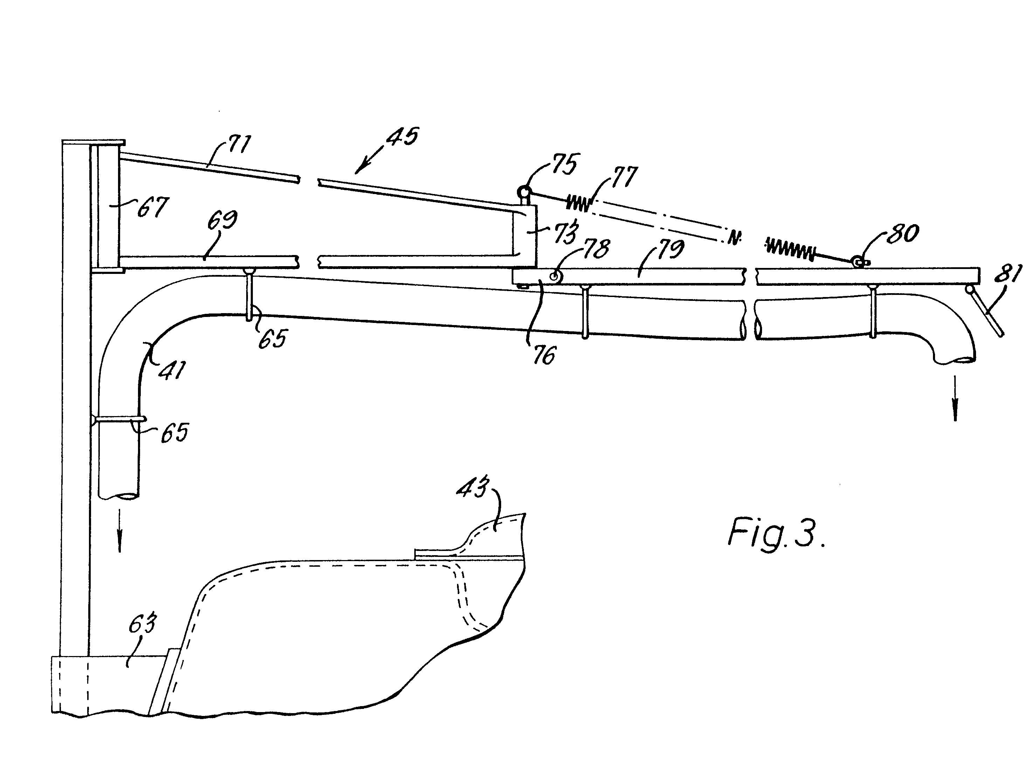

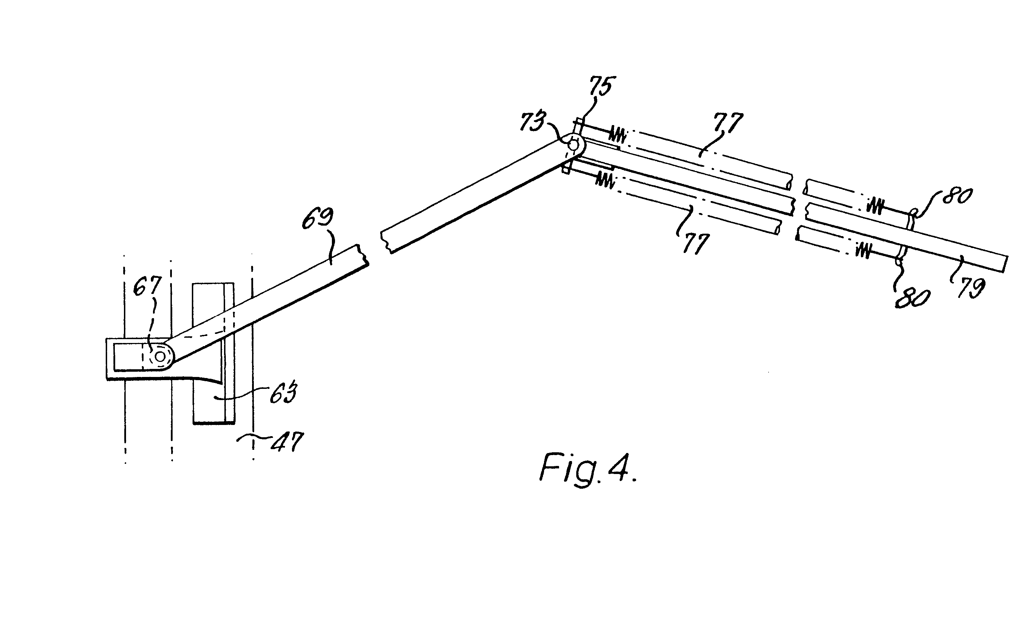

The control and connecting unit 33 together with the cables 41 projecting from it are of a considerable weight and, therefore, these are suspended from a boom arrangement 45. The boom arrangement 45 is shown in greater detail in Figures 3 and 4. The boom arrangement 45 comprises an upright pillar 61 held in position by brackets 63 connected to, for example, the main waste tank 47 at one of the ends thereof.

At the upper end of the pillar 61 is a pivot arrangement 67. Connected to the pivot arrangement 67 are horizontal yard 69 and bracing strut 71. The yard 69 and the strut 71 are connected to the pivot arrangement 67 so that the yard 69 projects from the bottom of the pivot arrangement 67 at approximately 90° with the strut 71 projecting from the top of the pivot arrangement 67. The strut 71 and the yard 69 are joined at their ends remote from the pillar 61 by a cylinder 73 connected at right angles to the yard 69.

Into the cylinder 73 is inserted substantially T-shaped member 75. The arms of the T project horizontally from the top of the cylinder 73 whilst the body of the T passes through the cylinder 73 and projects vertically below it. The projecting end is then secured to a member 76.

Secured by a horizontal pivot pin 78 through the member 76 is a second horizontal yard 79. At the arms of the T-shaped member 75 are secured counter-balancing springs 77 which are anchored to the yard 79 at a point indicated by hook 80. The springs 77 lie parallel to the yard 79 when seen from above as shown in Figure 4.

At the end of the yard 79 is connected a cable 81 which serves to support the control and connection unit 33.

As can be seen from Figure 3 cables 41 are supported by the boom arrangement 45 and held thereto by means of brackets 65 at intervals along their lengths. The boom arrangement by virtue of the pivots 67, 75 and 78 has a considerable degree of flexibility. Thus the yard 69 may pivot horizontally whilst the yard 79 may pivot both horizontally around member 75 and vertically around pivot pin 78. The counter-balancing springs 77 serve to hold the end of the yard 79 and hence the control and connector unit 33 in any desired vertical plane.

In order to aid the operator in inserting the mating projections from the connector unit 33 to the connector unit 35 of the toilet, there are provided handles 83 projecting from each side of the connector unit 33. These enable the operator to obtain a good grip on the unit 33 and to fully push home the mating connectors.

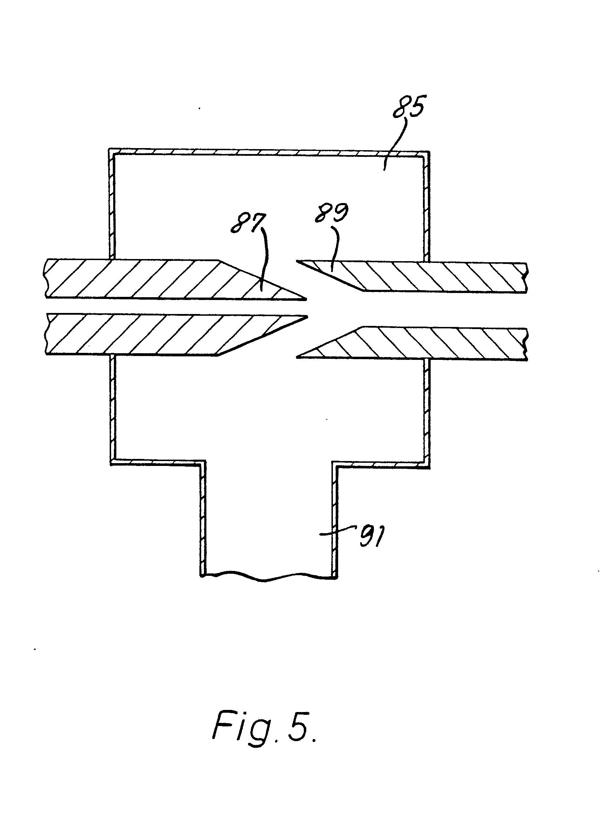

The vacuum pumps used in this embodiment of the present invention are shown in Figure 5. Compressed air supplied by a conventional industrial compressor is fed into venturi 87. Situated a small distance away from venturi 87 is a second corresponding venturi 89 of slightly greater bore. The ends of the venturis 87 and 89 are enclosed in a sealed container 85 with a single outlet pipe 91.

The flow of air from the venturi 87 into the corresponding venturi 89 creates a low pressure in the container 85 which is transmitted through pipe 91 into wherever the vacuum is required. In this embodiment the bore of the venturi 87 was $\frac{3}{16}$" and that of venturi 89 was $\frac{21}{64}$" but these may be varied to create any desired degree of vacuum or flow. This type of pump is particularly suitable for this application as it has no moving parts and is, therefore, not prone to blockages or breakdowns.

All the articles used in this embodiment of the present invention may be of any suitable material. However, in this embodiment all of the parts with the exclusion of the pipework and connectors are of glass reinforced plastics material. The connectors may be, for instance, made of steel, brass, cast iron, or copper. The pipes may be of a suitable rubber or plastics material for example. The use of GRP material for the majority of the parts enables exposed surfaces to be made glossy and smooth and so are particularly easy to clean.

The GRP material used in the present embodiment is as described below.

In this example all percentages are by weight unless otherwise stated. The form of carbon black used was a so-called fluffy carbon black of approximately 20 millimicrons particle diameter and sold under the trade mark VULCAN PF by Cabot Carbon Ltd. of Ellsemere Port, Cheshire. The plastics resin used was a HET acid based resin known as BEETLE Polyester Resin 870 produced by British Industrial Plastics (BIP) Chemicals Ltd. of Warley, Worcestershire.

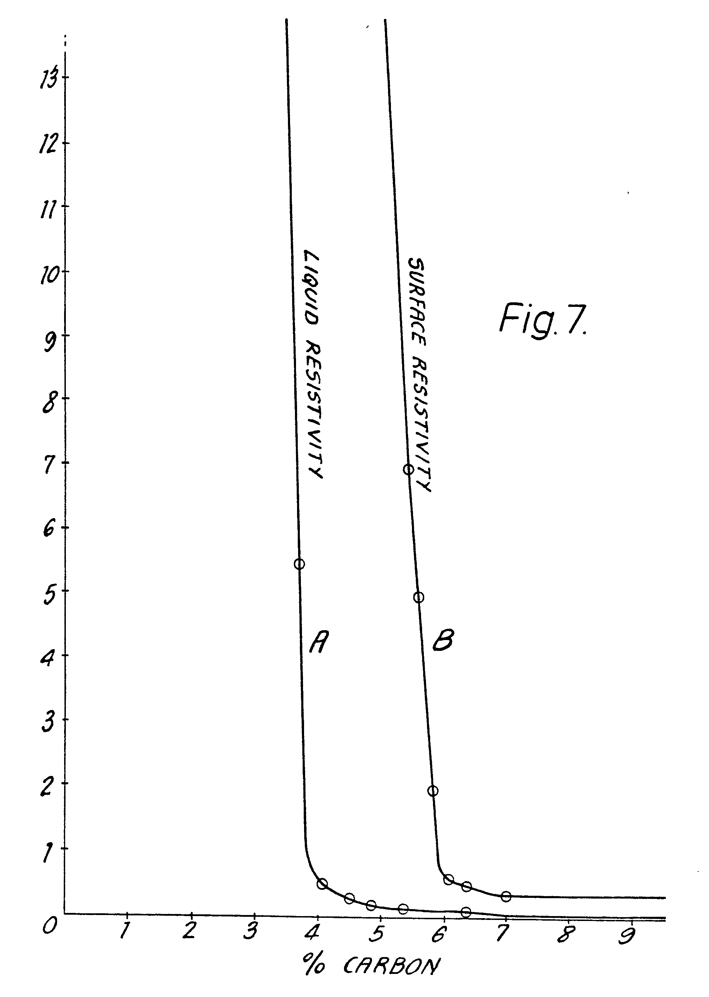

Referring to Figure 7, Curve A shows the variation of resistivity of the liquid resin against carbon black content. When the percentage of carbon black introduced into the resin mix was increased the liquid resistivity dropped rapidly over the range 3% to 4% carbon black, reaching a level of approximately 0.5M$\Omega$ . A content of from 4% to 10% carbon black reduces resistivity asymptotically to a level of about 0.1M$\Omega$ .

The liquid resistivity measurements were taken by introducing a sample of the resin mix into a nonconductive container, such as waxed paper cup, and then using aluminium foil electrodes positioned diametrically opposite one another on the internal surface of the container connected to a 1,000 megohm insulating tester at 600V. It should be noted that at this stage no hardener has been added to the mixture.

After this measurement had been taken the catalyst and accelerator were added to the resin sample in order to harden the resin. The accelerator was a 6% solution of cobalt soap added to the resin mix in an amount of from 1 to 3% by weight of the resin mix. The catalyst was a 50% solution of MEKP added in an amount of from 1 to 3%, typically around 2%, of the weight of the resin mix. A sheet of glass was coated with wax and a thin layer of the curing resin was then applied. Surface resistivity was then measured using a ring gauge. To perform this measurement a 1" diameter circle of aluminium foil is attached to a central portion of the layer of resin and an annular ring of aluminium foil of 4½" internal radius and 5" external radius is positioned around the inner circle. The circle and ring are attached to the resin after curing, the surface of the foil being wetted with a conductive solution to ensure good electrical contact. The electrical resistance from the inner circle to the outer annulus is then measured using the 1,000 megohm insulation tester running at 600V. The variation of resistivity of hardened resin against carbon black content is shown in Curve B. This curve is similar to the Curve A for the liquid resin. The resistivity drops rapidly over the range 5% to 6% carbon black content, and then, for a carbon black content of from 6% to 10% curves asymptotically to reach a value of approximately 0.4 ⌒ .

Although the HET acid based resins are particularly suitable for use in a GRP material for the manufacture of apparatus according to the present invention, these resins are relatively expensive. Particularly where the fire retardancy and chemical resistance are not of prime importance a phthallic acid based resin may be used. Alternatively a phthallic acid based resin may be used for the underlying material of an article coated by a HET acid based gel coat to reduce the build-up of static electricity on the surface of the article.

- 1 -

CLAIMS:

1. A portable toilet unit characterised in that the unit comprises a toilet bowl, a receptacle for waste matter, located below said bowl, a container for a cleaning liquid, means for delivering said cleaning liquid from said container to the bowl so as to clean the bowl and to wash waste matter from the bowl into the waste receptacle, the unit being provided with means whereby a waste removal unit may, when desired, be connected to the toilet unit for removal of waste matter to a remote site, and means whereby, when desired, cleaning liquid may be supplied to the unit from a remote site so as to clean the waste receptacle and refill the cleaning liquid container.

2. A unit according to claim 1 characterised in that the waste receptacle is located below the bowl and within the container, the cleaning liquid being held between the outer surface of the receptacle and the inner surface of the container.

3. A unit according to claim 1 or claim 2 characterised in that pump means are provided for feeding cleaning liquid from the container to spray outlets located adjacent the upper periphery of the toilet bowl.

4. A unit according to any of the preceding claims, characterised in that the bowl, receptacle, and container are made of a glass reinforced plastics material containing greater than 45% by weight of carbon black.

5. A unit according to claim 4 characterised in that the glass reinforced plastics material also contains tri-beta-chloroethylphosphate (TCEP).

6. A toilet assembly characterised in that the assembly comprises a toilet unit according to any of the claims 1 to 5, a waste removal unit adapted so as to be capable of connection to the toilet unit to move waste from the receptacle to a remote site, and a cleaning unit adapted so as to be capable of connection to the toilet unit to deliver cleaning liquid in the form of an atomised spray to the receptacle, so as to clean the receptacle, and to deliver cleaning liquid to the container so as to raise the level of the cleaning liquid in the container to a predetermined level.

7.    An assembly according to claim 6 characterised in that waste is removed from the receptacle by pump means and stored in a first remote tank for subsequent disposal, and cleaning liquid is delivered to the receptacle and container by pump means, from a second remote storage tank.

8.    An assembly according to claim 7 characterised in that said pump means are vacuum pump means comprising a substantially closed chamber into which are inserted two concentric venturis, positioned so as to be spaced apart in the direction of the longitudinal axes of the venturis, a first one of the venturis having a smaller bore than the second venturi, and having a substantially conical end spaced from the first a complimentary end of the second venturi, so that air blown f: venturi into the wider bore of the second venturi causes a substantial vacuum in the closed chamber, the vacuum being transmitted to the desired locations by tube means leading from the chamber.

9.    An assembly according to any of the preceding claims 7 or 8, characterised in that at least one of the said tanks is mounted on a mobile vehicle.

10.    A method of servicing a toilet unit, the method being characterised in that a waste removal unit is connected to the unit, and pump means are actuated to move waste from the receptacle to a remote site, a cleaning unit is connected to the unit and pump means are actuated to deliver cleaning liquid to the container
to a predetermined level, and to deliver cleaning
liquid in an atomised spray to clean the interior of the
waste receptacle.

Fig.1.

Fig.2.

Fig.3.

*Fig.4.*

Fig.5.

Fig.6.

Fig. 7.